# EUROPÄISCHE PATENTSCHRIFT

(11) **EP 0 490 182 B1**
(45) Veröffentlichungstag und Bekanntmachung des Hinweises auf die Patenterteilung: **20.04.1994**
(21) Anmeldenummer: 91120444.4
(22) Anmeldetag: 28.11.1991
(51) Int. Cl.: B01D 19/00, C02F 1/20

(54) **Anordnung zum Austreiben leichtflüchtiger Verunreinigungen aus dem Grundwasser**
Device for removing highly volatile impurities from ground water
Dispositif pour expulser des impuretés volatiles de l'eau/de la nappe souterraine

(30) Priorität: 13.12.1990 DE 4039824
(43) Veröffentlichungstag der Anmeldung: 17.06.1992
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- EP-A- 0 418 572
- WO-A-90/11811
- GB-A- 2 185 901

## Beschreibung

Die Erfindung betrifft eine Anordnung zum Austreiben leichtflüchtiger Verunreinigungen aus dem Grundwasser mit Hilfe von Luft oder anderer Gase, mit den im Oberbegriff des Hauptanspruches aufgeführten Merkmalen.

Anordnungen der eingangs genannten Art sind bereits vorgeschlagen worden, u.a. durch die DE-OS 36 25 488. Sie haben den Vorteil, daß mit geringem Energieaufwand durch Unterdruckbildung oberhalb dem sich in einem Schacht bildenden Grundwasserspiegel Luft oder andere Gase in einen unterhalb des Grundwasserspiegels im Schacht angeordneten Luftaufnahmeraum nachgesaugt werden und von dort durch eine Siebwandung hindurch in die Flüssigkeit austreten und die Flüssigkeit in Bläschenform durchströmen, wobei die leichtflüchtigen Verunreinigungen aus dem Grundwasser aufgenommen werden. Dabei ist auch vorgeschlagen worden, die Siebwandung als Düsenplatte auszubilden, die sich über einen Großteil des Schachtquerschnittes erstreckt, und an einem Schwimmer aufzuhängen, so daß sie immer in einem gleichbleibenden und einstellbaren Abstand vom Grundwasserspiegel im Schacht verbleibt.

Es hat sich gezeigt, daß in engen Schachtbohrungen oder Brunnenschächten die Anordnung einer quer zur Schachtlängsachse ausgerichteten Düsenplatte Schwierigkeiten bereitet und auch eine Grundwasser-Umwälzbewegung behindert, die durch die hindurchströmende Luft oder andere Gase ausgelöst wird und als "Airlifteffekt" bezeichnet wird.

Der Erfindung liegt die Aufgabe zugrunde, eine Anordnung der im Oberbegriff des Hauptanspruches genannten Art so auszubilden, daß sie auch in engen Brunnenbohrungen, also bei kleinem Schachtquerschnitt, einen guten Wirkungsgrad gewährleistet.

Die gestellte Aufgabe wird bei der genannten Anordnung erfindungsgemäß durch die im kennzeichnenden Teil des Hauptanspruches aufgeführte Merkmalskombination gelöst.

Anstelle einer quer zur Schachtlängsachse verlaufenden Düsenplatte ist ein mit einem Düsenöffnungsbereich endendes Rohr vorgesehen, das den Luftaufnahmeraum bildet und konzentrisch in den Schacht bis unter den Grundwasserspiegel eingebracht ist. Der mit Düsenöffnungen versehene, unterhalb des Grundwasserspiegels befindliche Endbereich des Rohres ist teilweise durch eine konzentrische Blendenhülse abgedeckt, die durch die Koppelung mit einem Schwimmkörper die Düsenöffnungen immer erst mit einem vorgegebenen Abstand unterhalb des Grundwasserspiegels im Schacht freigibt. Rings um das Rohr und die Blendenhülse verbleibt ausreichend Raum, um dort eine erwünschte Kreislaufbewegung des Grundwassers unter der Wirkung der hindurchströmenden Luft auszubilden, mit welcher verunreinigtes Grundwasser aus tieferen Schachtbereichen nach oben in den Reinigungsbereich automatisch nachgeholt wird. Die Kreislaufbewegung kann durch einen mit Abstand von der Blendenhülse angeordneten konzentrischen Wasserleitring begünstigt werden.

Das zentral angeordnete Rohr dient gleichzeitig zum Nachsaugen von Außenluft und ist zweckmäßig längsverstellbar in einem Schachtdeckel gelagert.

Das mit dem unteren Ende den Luftaufnahmeraum bildende Rohr kann an seinem Ende mit einem einen größeren Durchmesser aufweisenden Wasserführungsrohr verbunden sein, das tiefer in den Schacht hinein und durch eine Öffnung einer den grundwassergefüllten Schachtraum unterteilenden Querwandung dicht hindurchgeführt ist. Diese Anordnung begünstigt nicht nur die durch den Airlifteffekt ausgelöste Kreislaufbewegung des Grundwassers im Schacht, sondern auch eine Grundwasserbewegung in dem den Schacht umgebenden Erdreich. Hierzu ist bei dieser Anordnung die Schachtwandung im Bereich der Querwandung wasserundurchlässig gehalten, so daß das oberhalb der Querwandung durch die Luft in Bewegung gesetzte Grundwasser nach Durchlaufen der Reinigungszone gezwungen wird, durch einen oberen wasserdurchlässigen Schachtwandungsbereich in das umgebende Erdreich abzufließen und das dort befindliche Grundwasser in Bewegung zu setzen, das durch die unterhalb der Querwandung befindliche wasserdurchlässige Schachtwandung in den Schacht einfließen und durch das Wasserführungsrohr durch die Querwandung hindurch nach oben in den Reinigungsbereich aufströmen kann.

Der gewünschte Grundwasserkreislauf wird auch bei dem engen Querschnitt des Schachtrohres noch dadurch begünstigt, daß beim Ansaugen von kühlerer Außenluft und die dadurch bewirkte Abkühlung des Grundwassers in dem von mit Luft oder Gasen durchströmten Reinigungsbereich des Schachtes eine größere Dichte des gereinigten Grundwassers erreicht wird, die das Absinken des gereinigten Grundwassers im Schacht und nach einem Austritt aus dem Schacht auch im umgebenden Erdreich begünstigt.

Nachfolgend werden zwei Ausführungsbeispiele einer erfindungsgemäß ausgebildeten Anordnung anhand der beiliegenden Zeichnung näher erläutert.

Im einzelnen zeigen:
- Fig. 1: einen schematisierten Längsschnitt durch das obere Ende eines mit einer Anordnung gemäß der Erfindung versehenen Brunnenschachtes;
- Fig. 2: ein der Fig. 1 entsprechender schematisierter Längsschnitt mit einer zweiten Ausführungsform einer erfindungsgemäß ausgebildeten Anordnung.

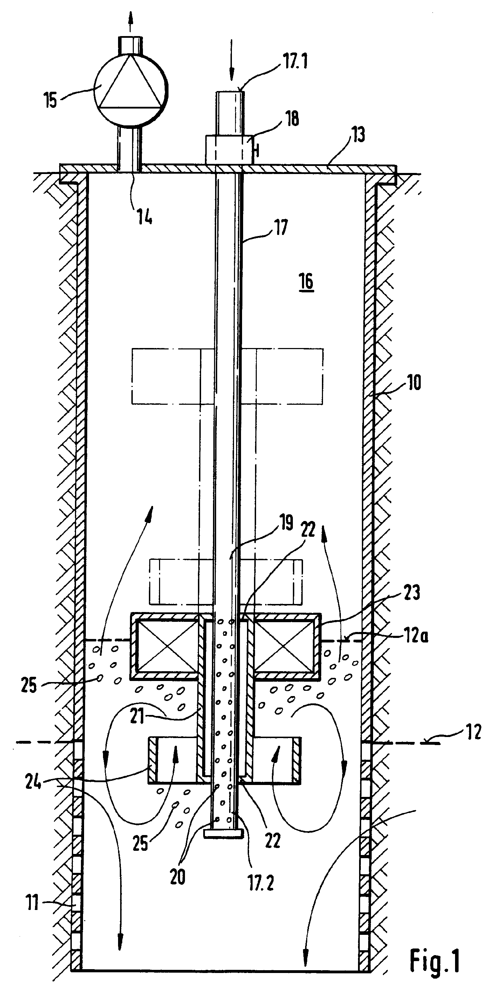

Fig. 1 zeigt ein Brunnenrohr 10, das eine Brunnenbohrung auskleidet und in seinem in das Grundwasser führende Erdreich reichenden Bereich eine wasserdurchlässige Wandung 11 aufweist. Der Grundwasserspiegel 12 ist durch eine Linie angedeutet. Das Brunnenrohr 10 ist oben mittels eines Deckels 13 verschlossen. Er weist eine erste Deckelöffnung 14 auf, oberhalb welcher ein nur schematisch angedeuteter Ventilator 15 angeordnet ist, mit welchem im Innenraum 16 des Brunnenrohres 10 ein Unterdruck erzeugt wird. Der Deckel 13 weist außerdem eine zentrale Durchgangsöffnung für ein Rohr 17 auf, das mittels einer Klemm-Manschette 18 am Deckel 13 gehalten ist. Das Rohr 17 bildet einen Luftaufnahmeraum 19, der über die obere Öffnung 17.1 des Rohres 17 mit der Außenluft in Verbindung steht. Der innere Endbereich 17.2 des Rohres 17 ist mit Düsenöffnungen 20 versehen. Über einen großen Längenbereich des mit den Düsenöffnungen 20 versehenen Endbereiches 17.2 des Rohres 17 ist eine konzentrische Blendenhülse 21 angeordnet, die auf dem Rohr 17 längsverschiebbar aber an ihren beiden Enden mittels Dichtringen 22 gegenüber dem Rohr abgedichtet ist. Mit der Blendenhülse 21 ist an ihrem oberen Ende ein ringförmiger Schwimmkörper 23 verbunden. Am unteren Ende der Blendenhülse 21 ist mit Abstand von ihr ein konzentrischer Wasserleitring 24 befestigt.

Durch den mittels des Ventilators 15 im Innenraum 16 des Brunnenrohres 10 erzeugten Unterdruck wird im Innern des Brunnenrohres 10 der Grundwasserspiegel gegenüber dem äußeren Grundwasserspiegel 12 auf einen Pegel 12a angehoben. Außerdem wird aus dem durch das Rohr 17 gebildeten Luftaufnahmeraum 19 die dort unter Atmosphärendruck befindliche Luft durch die nicht durch die Blendenhülse 21 abgedeckten Düsenöffnungen 20 hindurch in das im Brunnenrohr befindliche Grundwasser hinausgesaugt, wodurch diese Luft in Form von Luftbläschen 25 durch das Grundwasser hindurch nach oben in den Innenraum 16 des Brunnenrohres 10 aufsteigt. Dabei nimmt die Luft aus dem Grundwasser leichtflüchtige Verunreinigungen, wie Kohlenwasserstoffe, auf, die dann durch den Ventilator 15 zusammen mit der Luft aus dem Brunnenrohr 10 nach außen abgezogen werden. Die Luft wird in nicht dargestellter Weise über ein Filter geleitet, wo die Verunreinigungen ausgefiltert werden.

Die in Form der Luftbläschen 25 durch das Grundwasser aufsteigende Luft bringt das Grundwasser in eine ruhige Strömungsbewegung. Das Grundwasser steigt im mittleren Bereich nach oben, um dann entlang der wasserdurchlässigen Rohrwandung 11 nach unten abzusinken. Die Grundwasserzirkulation wird hierbei durch den Wasserleitring 24 begünstigt. Wenn die Außenluft kälter ist als das im Schacht befindliche Grundwasser, erfolgt eine Abkühlung des Grundwassers in dem beschriebenen Reinigungsbereich und dadurch eine Verdichtung des an der Wand nach unten abfließenden gereinigten Grundwassers, wodurch die Grundwasserzirkulation im Brunnenrohr noch weiter begünstigt wird.

Durch die Länge der Blendenhülse 21 ist die Höhe des von den Luftbläschen 20 durchflossenen Reinigungsbereiches immer festgelegt und unabhängig vom augenblicklichen Grundwasserspiegel 12 bzw. 12a, weil die Blendenhülse 21 durch den Schwimmer 23 den Grundwasserspiegelschwankungen folgen kann.

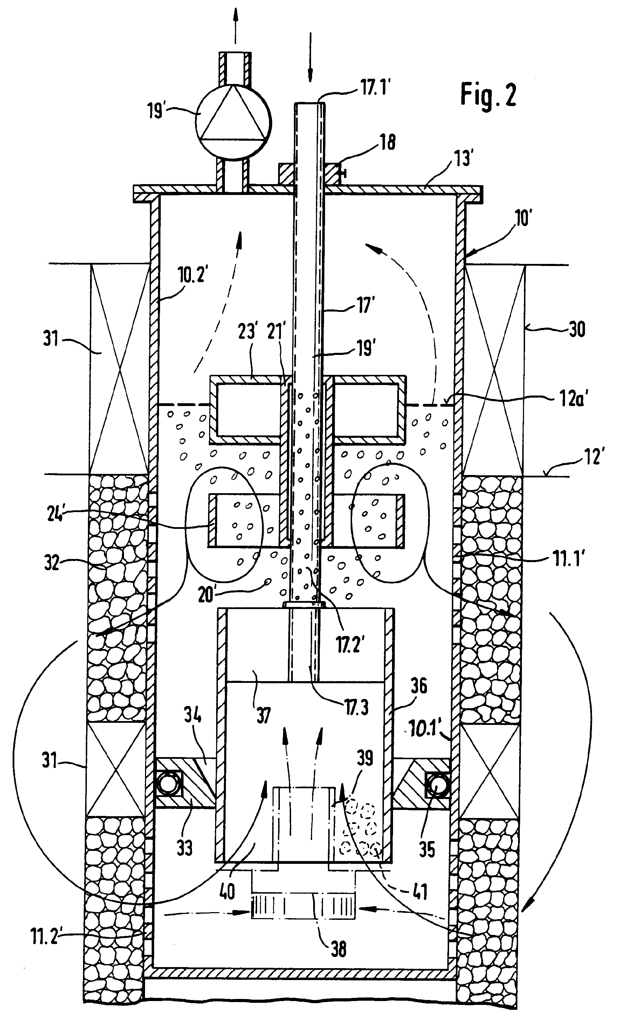

In Fig. 2 ist eine mit zusätzlichen Teilen versehene Anordnung dargestellt. Die der Anordnung nach Fig. 1 entsprechenden Teile sind mit den gleichen Bezugsziffern, ergänzt durch einen Indexstrich, bezeichnet. Das Brunnenrohr 10' ist mit Abstand in einer Schachtbohrung 30 angeordnet und im Bereich des Grundwassers mit einem oberen wasserdurchlässigen Rohrabschnitt 11.1' und einem unteren wasserdurchlässigen Rohrabschnitt 11.2' versehen, die durch einen wasserundurchlässigen Wandungsabschnitt 10.1' voneinander getrennt sind. Ebenfalls wasserundurchlässig ist der obere, in den grundwasserfreien Erdbereich ragende Endabschnitt 10.2' des Brunnenrohres 10' ausgebildet. Der zwischen dem Brunnenrohr 10' und der Wandung des Bohrschachtes 30 bestehende Zwischenraum ist auf der Höhe der wasserundurchlässigen Rohrabschnitte 10.1' und 10.2' jeweils mit Dichtungsmaterial 31 verschlossen, im Bereich der wasserdurchlässigen Rohrabschnitte 11.1' und 11.2' dagegen mit den Wasserdurchfluß nicht behindernden Schüttkörpern 32 ausgefüllt.

Im Bereich des wasserundurchlässigen Rohrabschnittes 10.1' ist der Innenraum des Rohres 10' durch eine in den Rohrkörper dicht eingesetzte Zwischenwandung 33 unterteilt. Diese Zwischenwandung weist eine große zentrale Durchgangsöffnung 34 auf, an deren Rand die Zwischenwandung 33 zu einer Dichtlippe 35 verjüngt ist. Die Durchgangsöffnung 34 ist von einem Wasserführungsrohr 36 durchsetzt, das mit dem unteren Ende 17.3' des zentralen Rohres 17' über Radialstege 37 verbunden ist. Durch die Zusatzteile wird bei dieser Anordnung erreicht, daß das gereinigte Grundwasser aus dem Reinigungsbereich weitgehend durch den wasserdurchlässigen Rohrabschnitt 11.1' hindurch nach außen in das grundwasserhaltige Erdreich ausströmt, und daß durch das Wasserführungsrohr 36 hindurch aus tieferen Schachtbohrungsbereichen Grundwasser nach oben in den Reinigungsbereich nachströmt. Die Strömung des Wassers ist durch ausgezogene Pfeillinien, die Strömung der Luft durch gestrichelte Pfeillinien angedeutet.

Die Wasserströmung im Brunnenrohr 10' kann bei Bedarf durch eine Pumpe 38 unterstützt werden, die in Fig. 2 mit strichpunktierten Linien vor der unteren Öffnung des Wasserführungsrohres 36 eingezeichnet ist. Außerdem ist in Fig. 2 mit strichpunktierten Linien vor der Pumpe 38 ein konzentrisches Leitrohr 39 angeordnet. Es begrenzt innerhalb des Wasserführungsrohres 36 eine nach oben offene Ringkammer 40, in welche Zusatzmittel abgebende oder sich allmählich im Wasser auflösende Festkörper 41 zur Unterstützung der Reinigungswirkung einbringbar sind.

## Patentansprüche

1. Anordnung zum Austreiben leichtflüchtiger Verunreinigungen aus dem Grundwasser mit Hilfe von Luft oder anderen Gasen, mit einer in einem bis in den Grundwasserbereich reichenden, mindestens bereichsweise eine wasserdurchlässige Wandung aufweisenden Schacht angeordneten Düsenwandung, die mindestens teilweise einen Luftaufnahmeraum begrenzt, der mit der Außenluft in Verbindung steht, und mit einem über der Schachtöffnung zur Unterdruckbildung in und zur Luftabsaugung aus dem oberhalb des Grundwasserspiegels befindlichen Schachtabschnitt angeordneten Ventilator,
dadurch gekennzeichnet, daß der Luftaufnahmeraum (19, 19') und seine Verbindung zur Außenluft durch ein in den Schacht bis unter den Grundwasserspiegel (12, 12') hineinragendes Rohr (17, 17') gebildet ist, das in seinem inneren Endbereich (17.2, 17.2') mit Düsenöffnungen (20, 20') versehen ist, und daß der Düsenöffnungsbereich des Rohres (17, 17') teilweise durch eine konzentrische Blendenhülse (21, 21') abgedeckt ist, die auf dem Rohr (17, 17') verschiebbar gelagert und mindestens an ihrem oberen Ende auch gegen das Rohr (17, 17') abgedichtet und mit einem Schwimmkörper (23, 23') gekoppelt ist.

2. Anordnung nach Anspruch 1, dadurch gekennzeichnet, daß am unteren Ende der Blendenhülse (21, 21') mit Abstand von ihr ein konzentrischer Wasserleitring (24, 24') befestigt ist.

3. Anordnung nach Anspruch 1 oder 2, dadurch gekennzeichnet, daß das den Luftaufnahmeraum (19, 19') bildende Rohr (17, 17') in einem Schachtdeckel (13, 13') längsverstellbar gelagert ist.

4. Anordnung nach einem der Ansprüche 1 bis 3, dadurch gekennzeichnet, daß mit dem unteren Ende (17.3') des den Luftaufnahmeraum (19') bildenden Rohres (17') ein koaxiales, einen wesentlich größeren Durchmesser als das Rohr (17') aufweisendes Wasserführungsrohr (36) befestigt ist, das durch eine Öffnung (34) einer den grundwassergefüllten Schachtraum unterteilenden Querwandung (33) dicht hindurchgeführt ist, und daß die Schachtwandung im Bereich der Querwandung (33) einen wasserundurchlässigen Abschnitt (10.1') aufweist.

5. Anordnung nach Anspruch 4, dadurch gekennzeichnet, daß der unteren Öffnung des Wasserführungsrohres (36) eine Pumpe (38) vorgesetzt ist.

6. Anordnung nach Anspruch 4 und 5, dadurch gekennzeichnet, daß im Wasserführungsrohr (36) und oberhalb der Pumpe (38) ein konzentrisches Leitrohr (39) angeordnet ist, das mit dem Wasserführungsrohr (36) eine nach oben offene ringförmige Kammer (40) begrenzt.

## Claims

1. Arrangement for the expulsion of volatile impurities from groundwater by means of air or other gases, comprising a nozzle wall which is arranged in a shaft, which extends into the groundwater area and has an at least partially water-permeable shaft and which at least partially defines an air accommodation area which is connected to external air, and a ventilator positioned above the shaft opening for the purpose of establishing a negative pressure in the shaft section above groundwater level and for suctioning air off the latter, **characterised in** **that** the air accommodation area (19, 19') and its connection to external air is established by a pipe (17, 17'), which extends in the shaft to below groundwater level (12, 12') and which is in its interior end region (17.2, 17.2') provided with nozzle openings (20, 20'), and that the area of nozzle openings of the pipe (16, 17') is partially covered by a concentric aperture sleeve (21, 21') which is displaceably mounted on the pipe (17, 17') and at least at its top end also sealed towards the pipe (17, 17') and coupled to a floating element 23, 23').

2. Arrangement according to claim 1, **characterised** **in that** a concentric water-ducting ring (24, 24') is mounted on the lower end of, and at a distance to the aperture sleeve (21, 21').

3. Arrangement according to claim 1 or 2, **characte****rised in that** the pipe (17, 17') serving as an air-accommodation area (19, 19') is arranged to be longitudinally adjustable in a shaft cover (13, 13').

4. Arrangement according to one of claims 1 to 3, **characterised in that** to the lower end (17.3') of the pipe (17') which serves as an air-accommodation area (19') is attached a coaxial water-ducting pipe (36), the diameter of which is substantially larger than the pipe (17') and which is tightly passed through an opening (34) of a transverse wail (33) which divides the ground-water-filled shaft area, and that the shaft wall has a water-impermeable section (10.1') in the area of the transverse wall (33).

5. Arrangement according to claim 4, **characterised** **in that** a pump (38) is positioned on the inlet of the water-ducting pipe (36).

6. Arrangement according to claim 4 and 5, **charac****terised in that** in the water-ducting pipe (36) and above the pump (38) is arranged a concentric guide pipe (39) which together with the water-ducting pipe (36) defines an upwardly open annular chamber (40).

## Revendications

1. Dispositif pour chasser des polluants volatils de la nappe souterraine à l'aide d'air ou d'autres gaz, avec une paroi à buses disposée dans un puits arrivant jusque dans la zone de la nappe souterraine, présentant au moins par endroits une paroi perméable à l'eau, qui délimite au moins partiellement un espace de réception d'air qui est en relation avec l'air extérieur et avec un ventilateur disposé au-dessus de l'ouverture du puits pour la formation d'une dépression dans et pour l'aspiration d'air hors de la section de puits se trouvant au-dessus du niveau de la nappe souterraine,
caractérisé en ce que l'espace de réception d'air (19, 19') et sa relation à l'air extérieur est formé par un tube (17, 17') parvenant dans le puits jusque sous le niveau de la nappe souterraine (12, 12'), qui est muni dans sa zone d'extrémité intérieure (17.2, 17.2') d'ouvertures à buses (20, 20') et en ce que la zone d'ouverture à buses du tube (17, 17') est recouverte partiellement par un manchon diaphragme concentrique (21, 21') qui est monté coulissant sur le tube (17, 17') et qui est rendu étanche aussi contre le tube (17, 17') au moins à son extrémité supérieure et est couplé avec un flotteur (23, 23').

2. Dispositif selon la revendication 1, caractérisé en ce qu'à l'extrémité inférieure du manchon diaphragme (21, 21') est fixée à distance de celui-ci une bague de guidage d'eau concentrique (24, 24').

3. Dispositif selon la revendication 1 ou 2, caractérisé en ce que le tube (17, 17') formant l'espace de réception d'air (19, 19') est monté réglable en longueur dans un couvercle de puits (13, 13').

4. Dispositif selon l'une des revendications 1 à 3, caractérisé en ce qu'un tube de guidage d'eau (36) coaxial, présentant un diamètre considérablement plus grand que le tube (17'), est fixé avec l'extrémité inférieure (17.3') du tube (17') formant l'espace de réception d'air (19'), lequel est introduit étanche à travers une ouverture (34) d'une paroi transversale (33) subdivisant l'espace de puits rempli de nappe souterraine et en ce que la paroi de puits dans la zone de la paroi transversale (33) présente une section imperméable à l'eau (10.1').

5. Dispositif selon la revendication 4, caractérisé en ce qu'une pompe (38) est montée devant l'ouverture inférieure du tube de guidage d'eau (36).

6. Dispositif selon les revendications 4 et 5, caractérisé en ce que dans le tube de guidage d'eau (36) et au-dessus de la pompe (38) est disposé un tube de guidage concentrique (39) qui délimite avec le tube de guidage d'eau (36) une chambre annulaire ouverte vers le haut (40).
